# EUROPEAN PATENT APPLICATION

(11) **EP 4 290 651 A1**
(43) Date of publication of application: **13.12.2023**
(21) Application number: 22767489.2
(22) Date of filing: 08.03.2022
(51) Int. Cl.: H01M 10/54, C22B 7/00, B02C 23/08

(54) **METHOD FOR PREPARING PRETREATED PRODUCT FOR RECOVERING VALUABLE METALS OF LITHIUM SECONDARY BATTERY**

(30) Priority: 09.03.2021 KR 20210030828
(71) Applicant: SK Innovation Co., Ltd., Seoul 03188 (KR)
(72) Inventor: KIM, Hyeon Jung, Daejeon 34124 (KR); SON, Sung Real, Daejeon 34124 (KR); KIM, Ji Min, Daejeon 34124 (KR); HA, Hyeon Bae, Daejeon 34124 (KR)
(74) Representative: Thoma, Michael
(86) International application number: PCT/KR2022/003288
(87) International publication number: WO 2022/191593

(57) **Abstract**

A method for preparing a pretreated product for recovering valuable metals of a lithium secondary battery comprises the steps of: preparing a cathode active material mixture from a cathode of a lithium secondary battery; drying or grinding the cathode active material mixture; and classifying the dried or ground cathode active material mixture so that the average diameter (D50) thereof becomes 400 µm or less. Flowability can be increased by decreasing the average diameter before reduction.

## Description

### [Technical Field]

The present invention relates to a method for preparing a pretreated product for recovering valuable metals of a lithium secondary battery. In addition, the present invention relates to a method for recovering valuable metals of a lithium secondary battery.

### [Background Art]

A secondary battery is a battery that can be repeatedly charged and discharged, and is widely applied to portable electronic communication devices such as camcorders, mobile phones, and laptop computers with the development of information communication and display industries. Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight. In this regard, the lithium secondary battery has been actively developed and applied as a power source.

The lithium secondary battery may include: an electrode assembly including a cathode, an anode, and a separation membrane (separator); and an electrolyte in which the electrode assembly is impregnated. In addition, the lithium secondary battery may further include, for example, a pouch-shaped outer case in which the electrode assembly and the electrolyte are housed.

A lithium metal oxide may be used as a cathode active material for the lithium secondary battery. The lithium metal oxide may further contain transition metals such as nickel, cobalt, or manganese.

The lithium composite oxide as the cathode active material may be prepared by reacting a lithium precursor with a transition metal precursor containing nickel, cobalt and manganese.

As the above-described expensive valuable metals are used for the cathode active material, excessively high costs are required to manufacture the cathode material. In addition, as the environmental protection issue is recently emerging, research on a method of recovering the cathode active material is being conducted. In order to recycle the cathode active material, it is necessary to regenerate the lithium precursor and the transition metal precursor from a cathode with high efficiency and high purity.

### [Detailed Description of the Invention]

### [Technical Objective]

An object of the present invention is to provide a method for preparing a pretreated product for recovering valuable metals of a lithium secondary battery with high efficiency and high reliability.

Another object of the present invention is to provide a method for recovering valuable metals of a lithium secondary battery with high efficiency and high reliability.

### [Technical Means]

A method for preparing a pretreated product for recovering valuable metals of a lithium secondary battery, the method includes preparing a cathode active material mixture from a cathode of the lithium secondary battery, drying or pulverizing the cathode active material mixture, and classifying the dried or pulverized cathode active material mixture to have an average particle diameter (D50) of 400 µm or less.

In some embodiments, the cathode may include a cathode current collector; and a cathode active material layer formed on the cathode current collector, and the preparing the cathode active material mixture may include removing the cathode current collector from the cathode.

In some embodiments, the drying may be performed at 60 °C to 100 °C for 48 hours to 96 hours.

In some embodiments, the pulverizing may be performed by means of an impact crusher including a ball mill or a hammer mill.

In some embodiments, the classifying may be performed by vibrating and screening the dried or pulverized cathode active material mixture.

In some embodiments, the method may include the steps, which are sequentially performed, of drying the cathode active material mixture, pulverizing the dried cathode active material mixture, and classifying the pulverized cathode active material mixture to have an average particle diameter of 400 µm or less.

In some embodiments, the prepared cathode active material mixture may include macroaggregated particles having a particle diameter of 1 mm to 100 mm and fine powder having a particle diameter of less than 1 mm.

In some embodiments, the classified cathode active material mixture may not include the macroaggregated particles.

According to another aspect of the present invention, there is provided a method for recovering valuable metals of a lithium secondary battery, the method includes reducing the above-described classified cathode active material mixture to form a preliminary precursor mixture, and recovering a lithium precursor and a transition metal precursor from the preliminary precursor mixture.

In some embodiments, the forming the preliminary precursor mixture may include: fluidizing the classified cathode active material mixture by means of a fluidizing gas in a fluidized bed reactor; and injecting a reducing gas into the fluidized bed reactor to form a preliminary precursor mixture from the fluidized cathode active material mixture.

In some embodiments, the reducing gas may include hydrogen.

In some embodiments, the preliminary precursor mixture may include preliminary lithium precursor particles and preliminary transition metal precursor particles.

In some embodiments, the recovering the lithium precursor and the transition metal precursor from the preliminary precursor mixture may include collecting the lithium precursor by washing the preliminary lithium precursor particles with water; and collecting the transition metal precursor by performing acid treatment on the preliminary transition metal precursor.

In some embodiments, the forming the preliminary precursor mixture may include treating the classified cathode active material mixture with an acidic solution including a reducing agent.

In some embodiments, the recovering the lithium precursor and the transition metal precursor from the preliminary precursor mixture may include collecting the lithium precursor and the transition metal precursor by inputting an extractant to a solution including a cathode active material mixture treated with the acidic solution.

### [Effects of the Invention]

The method for preparing a pretreated product for recovering valuable metals of a lithium secondary battery according to embodiments of the present invention may include: drying or pulverizing a cathode active material mixture; and classifying the dried or pulverized cathode active material mixture so as to have an average particle diameter of 400 µm or less. Accordingly, the average particle diameter of the cathode active material mixture is uniformly reduced, such that reactivity in a subsequent reduction process may be improved.

In some embodiments, the drying may be performed at 60 to 100°C for 48 to 96 hours. When the drying is performed under the above conditions, an electrolyte and moisture in the mixture may be sufficiently removed, thereby a classification process to be described below may be smoothly performed, and excessive aggregation of particles due to drying at an excessively high temperature may be prevented.

In some embodiments, the cathode active material mixture may be sequentially dried, pulverized and classified. In this case, the drying and pulverization processes are sequentially performed, such that macroaggregated particles may be sufficiently pulverized, and the particle diameter of the classified mixture may be formed relatively uniformly. Accordingly, a reduction reaction of the cathode active material mixture may be sufficiently performed as a whole. In addition, in the case of a flowable reduction reaction, the cathode active material mixture may have improved flowability.

### [Brief Description of Drawings]

FIG. 1 is a schematic flowchart illustrating a method for preparing a pretreated product for recovering active metals of a lithium secondary battery according to example embodiments.
FIG. 2 is a schematic flowchart illustrating a method of recovering active metals from a lithium secondary battery according to example embodiments.
FIG. 3 is schematic graphs illustrating the particle diameter distribution of an example and a comparative example.

### [Embodiments for Practicing the Invention]

Embodiments of the present invention provide a method for preparing a pretreated product for recovering valuable metals of a lithium secondary battery, which includes a pretreatment process for reducing an average particle diameter of a cathode active material mixture. In addition, there is provided a method for recovering valuable metals of a lithium secondary battery using the pretreated product prepared by the above method.

Hereinafter, embodiments of the present application will be described in detail. In this regard, the present invention may be altered in various ways and have various embodiments, such that specific embodiments will be illustrated in the drawings and described in detail in the present disclosure. However, the present invention is not limited to the specific embodiments, and it will be understood by those skilled in the art that the present invention is to cover all modifications, equivalents, and alternatives falling within the spirit and scope of the present invention.

Unless otherwise defined, all terms including technical and scientific terms used herein have the same meaning as commonly understood by one of ordinary skill in the art to which the present invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "precursor" is used to comprehensively refer to a compound including specific metals to provide the specific metals included in the electrode active material.

### <Method for preparing a pretreated product for recovering valuable metals of a lithium secondary battery>

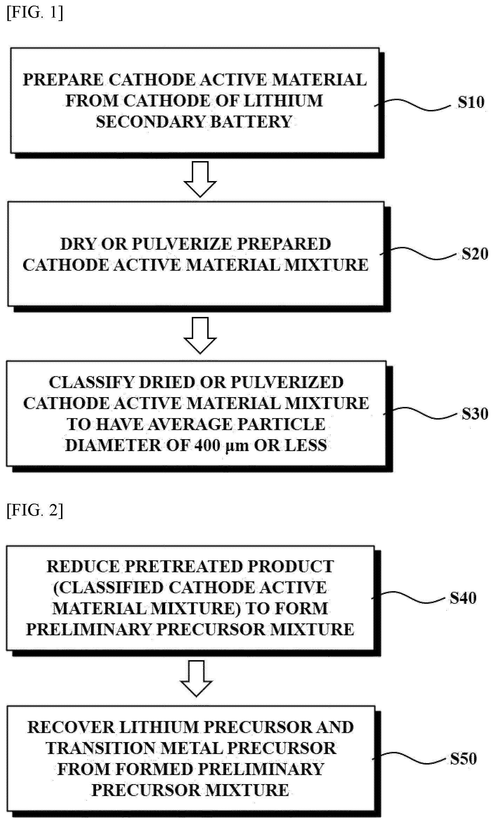

FIG. 1 is a schematic flowchart illustrating a method for preparing a pretreated product for recovering active metals of a lithium secondary battery according to example embodiments.

Referring to FIG. 1, a cathode active material may be prepared from a cathode of a lithium secondary battery (e.g., step S10).

The lithium secondary battery may include an electrode assembly including a cathode, an anode, and a separation membrane interposed between the cathode and the anode. The cathode and anode may include a cathode active material layer and an anode active material layer, which are coated on a cathode current collector and an anode current collector, respectively.

For example, the cathode active material included in the cathode active material layer may include an oxide containing lithium and transition metals.

In some embodiments, the cathode active material may include a compound having a composition represented by Formula 1 below.

[Formula 1] LiₓNi_{1-y}M_{y}O_{2+z}

In Formula 1, 0.9≤x≤1.2, 0≤y≤0.7, -0.1≤z≤0.1 and M may be at least one element selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr.

In some embodiments, the cathode active material may be an NCM-based lithium composite oxide including nickel, cobalt and manganese.

The cathode may be recovered by separating the cathode from the lithium secondary battery. The cathode may be, for example, a cathode recovered from a waste lithium secondary battery or a cathode damaged or failed during the manufacturing process.

For example, the cathode includes the cathode current collector (e.g., aluminum (Al)) and the cathode active material layer as described above, and the cathode active material layer may include a conductive material and a binder together with the above-described cathode active material.

The conductive material may include, for example, a carbon-based material such as graphite, carbon black, graphene, carbon nanotube or the like. The binder may include, for example, a resin material such as vinylidene fluoride-hexafluoropropylene copolymer (PVDF-co-HFP), polyvinylidene fluoride (PVDF), polyacrylonitrile, polymethyl methacrylate or the like.

In example embodiments, the cathode active material mixture may be collected by removing the cathode current collector from the recovered cathode. Accordingly, the cathode active material mixture may be collected in a form of powder from which aluminum is removed. As described above, the cathode active material mixture includes lithium transition metal oxide powder, and for example, may include NCM-based lithium oxide powder (e.g., Li(NCM)O₂).

In example embodiments, the cathode active material mixture may include cathode active material mixture particles such as the NCM-based lithium oxide. For example, the cathode active material mixture may be substantially composed of the cathode active material mixture particles.

For example, the collected cathode active material mixture may include macroaggregated particles having a particle diameter of 1 to 100 mm and fine powder having a particle diameter of less than 1 mm, which are mixed therein. When inputting the prepared cathode active material mixture into a reduction process to be described below without separate pretreatment, a non-uniform reaction may occur in the reduction process due to non-uniform particle diameter distribution.

For example, when the reduction process is a fluidization process to be described below, the reduction reaction may not be sufficiently performed since the macroaggregated particles are not fluidized. Accordingly, workability may be reduced and a recovery rate of the valuable metals may be decreased.

In addition, when the reduction process is a wet leaching process to be described below, a specific surface area of the particles of the cathode active material mixture is increased, such that reactivity to a reducing agent may be decreased.

According to example embodiments of the present invention, the prepared cathode active material mixture may be dried or pulverized (e.g., step S20).

In some embodiments, the prepared cathode active material mixture may be dried. In this case, the electrolyte and moisture included in the prepared cathode active material mixture may be removed. Accordingly, the flowability of the mixture may be increased and a purity of the valuable metal included in the mixture may be improved.

For example, the drying may be performed at 60 to 100°C for 48 to 96 hours. When the drying is performed under the above conditions, an electrolyte and moisture in the mixture may be sufficiently removed, thereby a classification process to be described below may be smoothly performed, and excessive aggregation of particles due to drying at an excessively high temperature may be prevented. Accordingly, the particle diameter distribution of the cathode active material mixture after classification may be formed relatively uniformly.

In some embodiments, the prepared cathode active material mixture may be pulverized. For example, the pulverization may be performed by means of an impact crusher including a ball mill, a hammer mill or the like.

For example, the impact crusher may be defined as a machine which pulverizes an object by using an impact force according to impact of a ball or impact of a hammer.

For example, the macroaggregated particles included in the cathode active material mixture prepared by performing the pulverization process may be pulverized into fine powder. Thereby, the average particle diameter of the cathode active material mixture is decreased, such that a uniform reduction reaction and excellent flowability may be implemented.

In example embodiments, a pretreated product for recovering valuable metals of a lithium secondary battery may be prepared by classifying the dried or pulverized cathode active material mixture so as to have an average particle diameter (D50) of 400 µm or less (e.g., step S30).

In the present invention, the term "average particle diameter" or "D50" may refer to a particle diameter when a volume accumulation percentage in the particle size distribution obtained from the particle volume corresponds to 50%.

In the present invention, the term "pretreated product" may refer to a cathode active material mixture classified after pulverization or drying the same.

For example, the classification may be performed by vibrating and screening the dried or pulverized cathode active material mixture. For instance, the mixture may be vibrated and classified on a screen having a mesh size of 400 µm. For example, the classification may be performed through a twist screen device.

For example, the particle diameter of the dried or pulverized cathode active material mixture particles may be uniformly controlled by performing the classification process. In this case, a uniform reaction may be performed in the reduction process to be described below, and the flowability of the mixture may be increased in the fluidization reduction process. Accordingly, workability may be improved and valuable metals may be recovered with high efficiency and high purity.

In some embodiments, the inventive method may include the processes, which are sequentially performed, of drying the prepared cathode active material mixture; pulverizing the dried cathode active material mixture; and classifying the pulverized cathode active material mixture so as to have an average particle diameter of 400 µm or less.

For example, the prepared cathode active material mixture may be first input into the above-described drying process. The electrolyte and moisture in the mixture are removed such that the pulverization process may be smoothly performed. Thereby, the average particle diameter of the cathode active material mixture after classification may be sufficiently decreased (e.g., 400 µm or less).

For example, the dried cathode active material mixture may be pulverized. Since the electrolyte and moisture have been removed, a pulverization performance to the macroaggregated particles included in the mixture may be improved.

For example, the pretreated product for recovering valuable metals of a lithium secondary battery may be obtained by classifying the pulverized cathode active material mixture so as to have an average particle diameter of 400 µm or less. In this case, since the drying and pulverization processes are sequentially performed such that the macroaggregated particles can be sufficiently pulverized, the particle diameter of the classified mixture may be formed relatively uniformly. Thereby, the reduction reaction of the cathode active material mixture may be sufficiently performed as a whole, and in the case of the flowable reduction reaction, fluidization of the cathode active material mixture may be smoothly performed.

For example, when the average particle diameter of the cathode active material mixture exceeds 400 µm, the specific surface area of the cathode active material mixture is decreased, such that the reactivity of the reduction reaction and the flowability of the particles may be reduced. Accordingly, the recovery rate of the valuable metals included in the cathode active material mixture may be reduced.

In some embodiments, the cathode active material may be subjected to additional heat treatment before inputting it into a reduction leaching process to be described below. For example, impurities such as a conductive material and a binder included in the cathode active material layer may be at least partially removed by the additional heat treatment. Thereby, the cathode active material mixture including high purity valuable metals may be input into the reduction process.

The heat treatment temperature may be performed, for example, at about 100 to 500 °C, and preferably about 350 to 450 °C. Within the above range, destroy or damage to the cathode active material mixture may be prevented while the impurities are substantially removed.

### <Method for recovering valuable metals of a lithium secondary battery>

FIG. 2 is a schematic flowchart illustrating a method of recovering active metals from a lithium secondary battery according to example embodiments.

Referring to FIG. 2, the pretreated product (e.g., the classified cathode active material mixture) obtained as described above may be reduced to from a preliminary precursor mixture (e.g., step S40).

The preliminary precursor mixture may include preliminary lithium precursor particles and preliminary transition metal precursor particles.

The preliminary lithium precursor particle may include, for example, at least one of lithium hydroxide (LiOH), lithium oxide (Li₂O) and lithium carbonate (Li₂CO₃). In terms of charge/discharge characteristics, life-span characteristics, and high-temperature stability of the lithium secondary battery, the lithium precursor may include the lithium hydroxide.

The preliminary transition metal precursor particles may include, for example, Ni, Co, NiO, CoO and MnO.

In some embodiments, the reduction may be performed through a fluidization reduction process of fluidizing and reducing the classified cathode active material mixture. For example, the reduction may be performed through a fluidized bed reactor.

As used herein, the term "fluidized bed reactor" may refer to a reactor in which a fluid (gas or liquid) is passed through the injected preliminary cathode active material mixture to fluidize the cathode active material mixture.

For example, the cathode active material mixture may be fluidized by inputting the pretreated product into the fluidized bed reactor and injecting a fluidizing gas into the fluidized bed reactor.

For example, the fluidizing gas may be an oxygen or nitrogen-containing gas.

The above-described pretreated product may include fine powder having an average particle diameter of 400 µm or less by removing the macroaggregated particles, and may include particles having a uniform particle diameter as a whole through classification. In this case, the mixture may be smoothly fluidized by the fluidizing gas. Accordingly, the reduction reaction of the pretreated product may be uniformly performed as a whole, and a yield of the preliminary precursor mixture may be increased, thereby improving the recovery rate of the valuable metals.

In some embodiments, the fluidized pretreated product may be reduced by a reducing gas injected into the fluidized bed reactor to form a preliminary precursor mixture.

For example, the reducing gas may be a mixed gas of hydrogen and a nonreactive gas.

In some embodiments, the reduction may be performed through a wet leaching process in which the classified cathode active material mixture is reduced by inputting it into an acidic solution together with a reducing agent.

The reducing agent may include, for example, at least one of hydrogen peroxide (H₂O₂), SO₂, Na₂S, NaHS, Na₂S₂O₅, NaHSO₃, Na₂S₂O₃, KHSO₃, K₂SO₃, FeSO₄, H₂S, glucose, sucrose and ascorbic acid.

The acidic solution may include, for example, at least one of sulfuric acid (H₂SO₄), hydrochloric acid (HCl), nitric acid (HNO₃), oxalic acid and citric acid.

For example, the preliminary precursor mixture may be formed by inputting the classified cathode active material mixture into the acidic solution together with the reducing agent. Since the average particle diameter of the cathode active material mixture is controlled to 400 µm or less and the macroaggregated particles are removed, for example, the specific surface area of the cathode active material mixture particles, and accordingly the reactivity to the reducing agent may be increased.

In example embodiments, a lithium precursor and a transition metal precursor may be recovered from the formed preliminary precursor mixture (e.g., step S50).

The preliminary precursor mixture may include the preliminary lithium precursor particles and the preliminary transition metal precursor particles.

In some embodiments in which the preliminary precursor mixture is formed through the above-described fluidization reduction process, the preliminary precursor mixture may react with a leachate to form the lithium precursor. For example, the preliminary lithium precursor particles included in the preliminary precursor mixture may react with the leachate to form a lithium precursor.

For example, lithium oxide and lithium carbonate may react with the leachate to form a lithium hydroxide, and the formed lithium hydroxide may be dissolved in the leachate and collected.

In some embodiments, the leachate may include water. In this case, the preliminary precursor mixture may be washed with water. Through the water washing treatment, the preliminary precursor mixture and water may react with each other to form a lithium precursor in which the lithium hydroxide is dissolved in water.

In some example embodiments, the leachate may further include dimethyl carbonate or diethyl carbonate.

For example, dimethyl carbonate or diethyl carbonate may accelerate a reaction of the preliminary precursor mixture with water. Accordingly, separation efficiency of the lithium precursor may be improved.

In some embodiments, the preliminary transition metal precursor particles in the preliminary precursor mixture may react with an acid solution to form a transition metal precursor. For example, precipitated transition metal precursors may be collected.

For example, sulfuric acid may be used as the acid solution. In this case, the transition metal precursor may include a transition metal sulfate. For example, the transition metal sulfate may include NiSO₄, MnSO₄, CoSO₄ or the like.

In some embodiments in which the preliminary precursor mixture is formed through the above-described wet leaching process, the lithium precursor and the transition metal precursor may be extracted by inputting an extractant into a solution containing the preliminary precursor mixture.

The extractant may include, for example, at least one of a phosphoric acid-based extractant, a phosphate-based extractant, a phosphine oxide-based extractant, and a carboxylic acid-based extractant.

For example, the extractant may include at least one of di-2-ethylhexyl phosphoric acid (D2EHPA), bis(2,4,4-trimethylpentyl) phosphinic acid (Cyanex 272), 2-ethylhexyl phosphoric acid mono-2-ethylhexyl ester (PC88A), tributyl phosphate, trioctyl phosphine oxide and alkyl monocarboxylic acid.

Hereinafter, experimental examples including specific examples and comparative examples will be described to more concretely understand the present invention. However, those skilled in the art will appreciate that such examples are provided for illustrative purposes and do not limit subject matters to be protected as disclosed in appended claims. Therefore, it will be apparent to those skilled in the art various alterations and modifications of the embodiments are possible within the scope and spirit of the present invention and duly included within the range as defined by the appended claims.

### Example 1

1 kg of a cathode material separated from a waste lithium secondary battery is cut into small units and pulverized through milling to prepare a cathode active material mixture including Li-Ni-Co-Mn oxide, a binder (polyvinylidene fluoride, PVDF), and a conductive material (carbon black) (step S10).

The cathode active material mixture was put into an oven and dried at 80°C for 72 hours. Thereafter, the dried cathode active material mixture was input into an impact crusher and pulverized (step S20).

The pulverized cathode active material mixture was input into a twist screen having a mesh size of 400 µm and classified (step S30).

The classified cathode active material mixture was input into a fluidized bed reactor and fluidized by inputting nitrogen gas. The fluidized cathode active material mixture was reduced by inputting hydrogen gas as a reducing gas into the fluidized bed reactor to form a preliminary precursor mixture (step S40).

The formed preliminary precursor mixture was washed with water to obtain an aqueous lithium precursor solution. In addition, the preliminary precursor mixture was subjected to acid treatment to obtain a transition metal precursor (step S50).

### Example 2

Valuable metals were recovered according to the same procedures as described in Example in Example 1, except that the drying temperature was 55°C.

### Example 3

Valuable metals were recovered according to the same procedures as described in Example in Example 1, except that classification was performed immediately after drying without performing pulverization.

### Example 4

Valuable metals were recovered according to the same procedures as described in Example in Example 1, except that the prepared cathode active material mixture was pulverized and then immediately classified without drying.

### Comparative Example 1

Valuable metals were recovered according to the same procedures as described in Example in Example 1, except that the prepared cathode active material mixture was directly input into the fluidized bed reactor without performing the drying, pulverization and classification.

### Comparative Example 2

Valuable metals were recovered according to the same procedures as described in Example in Example 1, except that the pulverized cathode active material mixture was input into a twist screen having a mesh size of 500 µm and classified.

### Experimental example

### (1) Measurement of average particle diameters (D50, and D90)

Average particle diameters of the classified cathode active material mixtures of the above-described examples and Comparative Example 2 and the prepared cathode active material mixture of Comparative Example 1 were measured using a laser light diffraction/scattering device Mastersizer 3000 (manufactured by Malvern).

### (2) Evaluation of flowability

After fluidizing the cathode active material mixture input into the fluidized bed reactor according to the above-described examples and comparative examples, flowability was evaluated by visually observing the mixture according to the following evaluation criteria.
∘: Unfluidized macroaggregated particles were not observed
X: Unfluidized macroaggregated particles were observed

### (3) Measurement of recovery rate of valuable metals

In the above-described examples and comparative examples, the recovery rate of the valuable metals was calculated by measuring weights of the recovered lithium and transition metals based on the weights of lithium and transition metals in the initial cathode active material mixture sample.

Measurement and evaluation results are shown in Table 1 below.

**[TABLE 1]**

| Item | D50 (µm) | D90 (µm) | Flowability | Recovery rate of valuable metals (%) |
|---|---|---|---|---|
| Example 1 | 16 | 44 | ○ | 91 |
| Example 2 | 20 | 125 | ○ | 88 |
| Example 3 | 33 | 375 | ○ | 80 |
| Example 4 | 23 | 206 | ○ | 81 |
| Comparative Example 1 | 38 | 911 | X | - |
| Comparative Example 2 | 32 | 695 | X | - |

Referring to Table 1, the examples that have undergone drying or pulverization of the cathode active material mixture before inputting it into the reduction process and classification to an average particle diameter of 400 µm or less had lower average particle diameters and increased flowability, as well as the recovery rate of valuable metals was increased compared to the comparative examples.

Further, in Comparative Examples 1 and 2, fluidization reaction was not performed due to low flowability, such that valuable metals could not be recovered.

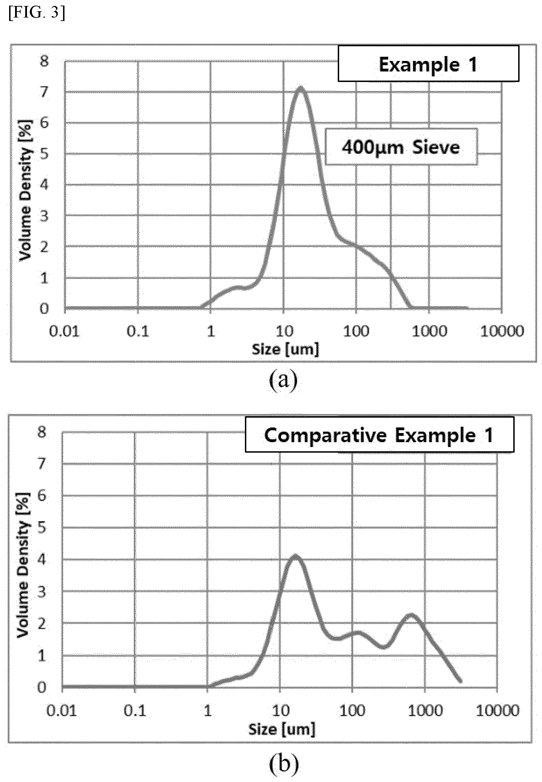

FIG. 3 is a schematic graph illustrating particle diameter distributions of Example 1 and Comparative Example 1.

Referring to FIG. 3, in the case of Example 1, most of the mixture were formed in the form of fine powder having a particle diameter of 400 µm or less, but in the case of Comparative Example 1, macroaggregated particles having a particle diameter of 1,000 µm or more were included in the mixture.

In the case of Example 2, in which drying was performed at a temperature of less than 60°C, the electrolyte and moisture in the cathode active material mixture did not evaporate sufficiently, thereby causing a reduction in efficiencies of subsequent pulverization and classification processes. Accordingly, the average particle diameter and the recovery rate of the valuable metals were slightly reduced compared to Example 1.

In the cases of Example 3 in which classification was performed immediately without going through drying and pulverization, and Example 4 in which the cathode active material mixture was immediately pulverized and classified without drying, the average particle diameters were increased relatively and the recovery rates of the valuable metals were reduced, compared to Examples 1 and 2 in which all the drying, pulverization and classification were performed.

## Claims

1. A method for preparing a pretreated product for recovering valuable metals of a lithium secondary battery, the method comprising:
preparing a cathode active material mixture from a cathode of the lithium secondary battery;
drying or pulverizing the cathode active material mixture; and
classifying the dried or pulverized cathode active material mixture to have an average particle diameter (D50) of 400 µm or less.

2. The method according to claim 1, wherein the cathode comprises a cathode current collector; and a cathode active material layer formed on the cathode current collector, and
the preparing the cathode active material mixture comprises removing the cathode current collector from the cathode.

3. The method according to claim 1, wherein the drying is performed at 60 °C to 100 °C for 48 hours to 96 hours.

4. The method according to claim 1, wherein the pulverizing is performed by means of an impact crusher including a ball mill or a hammer mill.

5. The method according to claim 1, wherein the classifying is performed by vibrating and screening the dried or pulverized cathode active material mixture.

6. The method according to claim 1, comprising the steps, which are sequentially performed, of:
drying the cathode active material mixture;
pulverizing the dried cathode active material mixture; and
classifying the pulverized cathode active material mixture to have an average particle diameter of 400 µm or less.

7. The method according to claim 1, wherein the prepared cathode active material mixture comprises macroaggregated particles having a particle diameter of 1 mm to 100 mm and fine powder having a particle diameter of less than 1 mm.

8. The method according to claim 7, wherein the classified cathode active material mixture does not include the macroaggregated particles.

9. A method for recovering valuable metals of a lithium secondary battery, the method comprising:
reducing the classified cathode active material mixture of claim 1 to form a preliminary precursor mixture; and
recovering a lithium precursor and a transition metal precursor from the preliminary precursor mixture.

10. The method according to claim 9, wherein the forming the preliminary precursor mixture comprises:
fluidizing the classified cathode active material mixture by means of a fluidizing gas in a fluidized bed reactor; and
injecting a reducing gas into the fluidized bed reactor to form a preliminary precursor mixture from the fluidized cathode active material mixture.

11. The method according to claim 10, wherein the reducing gas includes hydrogen.

12. The method according to claim 10, wherein the preliminary precursor mixture comprises preliminary lithium precursor particles and preliminary transition metal precursor particles.

13. The method according to claim 12, wherein the recovering the lithium precursor and the transition metal precursor from the preliminary precursor mixture comprises:
collecting the lithium precursor by washing the preliminary lithium precursor particles with water; and
collecting the transition metal precursor by performing acid treatment on the preliminary transition metal precursor.

14. The method according to claim 9, wherein the forming the preliminary precursor mixture comprises:
treating the classified cathode active material mixture with an acidic solution including a reducing agent.

15. The method according to claim 14, wherein the recovering the lithium precursor and the transition metal precursor from the preliminary precursor mixture comprises:
collecting the lithium precursor and the transition metal precursor by inputting an extractant to a solution including a cathode active material mixture treated with the acidic solution.
